# EUROPEAN PATENT SPECIFICATION

(11) **EP 4 241 602 B1**
(45) Date of publication and mention of the grant of the patent: **01.07.2026**
(21) Application number: 23160135.2
(22) Date of filing: 06.03.2023
(51) Int. Cl.: A43B 5/02, A43C 15/16

(54) **OUTSOLE FOR A SHOE, IN PARTICULAR FOR A SOCCER SHOE AND METHOD FOR THE MANUFACTURE OF SUCH OUTSOLE**
LAUFSOHLE FÜR EINEN SCHUH, INSBESONDERE FÜR EINEN FUSSBALLSCHUH UND VERFAHREN ZUR HERSTELLUNG SOLCHEN LAUFSOHLE
SEMELLE D'USURE POUR CHAUSSURE, EN PARTICULIER CHAUSSURE DE FOOTBALL ET PROCÉDÉ DE FABRICATION DE TELLE SEMELLE

(30) Priority: 08.03.2022 DE 102022202302
(43) Date of publication of application: 13.09.2023
(73) Proprietor: adidas AG, 91074 Herzogenaurach (DE)
(72) Inventor: THOMPSETT, Benjamin Alexander, 91074 Herzogenaurach (DE); CURET, Raphael, 91074 Herzogenaurach (DE)
(74) Representative: Bardehle Pagenberg Partnerschaft mbB Patentanwälte Rechtsanwälte

(56) References cited:
- US-A1- 2005 016 029
- US-A1- 2011 078 927
- US-A1- 2019 335 852

## Description

### 1. Technical field

The present invention relates to an outsole for a shoe, in particular for a soccer shoe, to a shoe with such an outsole as well as a method for the manufacture of such items.

### 2. Background of the invention

Outsoles of shoes for ball sports or lawn sports, like soccer shoes, American football shoes, or rugby shoes, commonly include a number of cleats or studs that serve as anchor points to improve traction on the ground (e.g., on grass or some other natural or synthetic surface) during running and, in particular, when kicking a ball with one foot while the other foot is planted on the ground.

However, when kicking a ball in extreme positions, e.g., during a curve kick when the foot that is planted on the ground is strongly tilted onto one of its side-edges, it is common that the standard traction elements known from the art are not in complete contact with the ground. The same might apply during sudden or sharp changes of direction, which are often part of the above-mentioned sports.

To address this situation, peripheral studs that have the purpose of providing additional traction to the player when he or she is in such extreme kicking positions or during changes of direction have been considered. The peripheral studs can be placed on the peripheral surface of the medial or lateral side of a shoe.

Document US 2021/0259367 A1 discloses an outsole for an article of footwear that includes a plantar surface and a peripheral surface surrounding the plantar surface. The outsole includes an annular cleat set including a first plurality of traction elements arranged in series about a central axis on the plantar surface, and the outsole further includes one or more radial cleat sets each including a second plurality of the traction elements aligned along a respective radial axis intersecting the central axis. At least one of the second plurality of the traction elements includes a peripheral cleat formed on the peripheral surface of the outsole.

Document EP 2 862 465 A1 discloses an article of footwear that comprises a sole structure having a forefoot region and a heel region. The sole structure has a medial side and a lateral side. The outermost surface of the medial side forms an outer medial peripheral edge, and the outermost surface of the lateral side forms an outer lateral peripheral edge. At least one first wedge-shaped stud extends beyond the outer medial peripheral edge of the forefoot region of the sole structure and has a height and a length extending from the medial side of the forefoot region, and at least one second wedge-shaped stud extends beyond the outer lateral peripheral edge of the forefoot region of the sole structure and has a height and a length extending from the lateral side of the forefoot region.

US Design Patent US D840,654 S shows an ornamental design for a cleat for an article of footwear.

Document US 2013/0 333 248 A1 relates to an article of footwear having a base plate comprising a structure and studs. The structure can alleviate cleat pressure and improve grip during the first step of sprinting, rapid changes of direction and backward movements.

Further, document US 2011/0 078 927 A1 relates to a sole structure for an article of footwear. The sole structure comprising a sole base member forming a portion of the ground contacting surface of the sole structure and a rigid cantilevered stud having an attached end and an opposite free end, the attached end being attached to the sole base member and the free end extending away from the attached end and forming a portion of the ground contacting surface of the sole structure during at least some times during a stride cycle.

Document US 853 101 S relates to an ornamental design for a shoe.

Document US 2015 10 237 964 A1 relates to a replaceable cleat system for an article of footwear comprising an outer sole member having a plurality of fixed cleat members and a plurality of removable cleat members.

Further, US 2019/335852 A1 relates to a layered material that can be incorporated in to textiles (e.g., footwear, apparel, sporting equipment, or components of each). Specifically, the layered material can be included in footwear having traction elements such as cleats, where the layered material can be positioned among the traction elements and/or between the toe region and heel region of the outsole component (e.g., midfoot region). US 2005/016029 A1 relates to a cleated article of footwear. More specifically, the invention relates to a cleated article of footwear designed to address motions prevalent in the sport of soccer so as to enhance performance and prevent injuries.

A disadvantage of the known constructions is, however, that they require complex manufacturing processes and also leave further room for improvement regarding the performance properties of the sole, e.g., in the above-mentioned scenarios of extreme kicking positions and/or sudden and abrupt changes of direction.

An object of the present invention is therefore the provision of an outsole and a shoe with improved performance which allow for a simplified manufacture.

### 3. Summary of the invention

The invention is defined by the outsole of claim 1 and the method of claim 15. Preferred embodiments are defined in the dependent claims.

The above-outlined problems are addressed and are at least partly solved by the present invention.

Already at this point it is emphasized that reference will in the following be made predominantly to an outsole for a shoe, but that the present invention may also be employed in a more general sole that does not necessarily comprise a dedicated outsole (unless this is declared as a mandatory feature of any given embodiment). Such a sole could, for example, be of a one-piece-construction and the discussed main- and peripheral stud(s) with their respective bridge portion(s), etc., could also be part of such a sole.

Also, the discussion will mainly focus on outsoles for soccer shoes, but this is again not limiting, and the disclosed aspects, options, features and embodiments may also be employed in different kinds of sports-, work- or leisure shoes, for example.

According to a first aspect, an outsole for a shoe, in particular for a soccer shoe, is provided. The outsole comprises a first main stud disposed on a bottom surface of the outsole, and a first peripheral stud disposed on a peripheral surface of the outsole. A tip of the first main stud and a tip of the first peripheral stud are linked by a first bridge portion.

When talking about the "tip" of a given stud in this document, this can generally relate to that part of the stud that (predominantly) engages with the ground during use and play. In other words, the "tip" of a stud need not be confined to the outmost ground-facing surface of the stud but can also extend a certain distance towards the shoe and outsole base and hence have extensions into all three dimensions. This will become even clearer when having regard to the detailed description that follows below. For example, a given stud tip could form the top half, or the top third, or the top two thirds of a given stud.

The bottom surface of the outsole can be understood, for example, as that part of the outsole that lies generally beneath the wearer's foot when he or she is treading on a flat piece of ground. This can therefore be the region of the outsole where conventionally studs have been arranged.

The peripheral surface can be arranged on or around the rim of the bottom surface and extend outwards towards the front-, back-, medial- and/or lateral side of the sole. It can also curve upwards and thus support the foot of a wearer on one or several sides (e.g., on the front-, back-, medial- and/or later side of the foot), e.g., to avoid or reduce slipping and shifting of the foot within the shoe.

The bottom surface and/or the peripheral surface can each be one connected region, but one or both of them can also comprise several (i.e., two or more) subregions that are disconnected from one another, for example, if the outsole is provided with two or more separate outsole parts, as discussed farther below.

On the bottom surface, (at least) a first main stud is disposed, which provides an anchor point to improve traction during "normal" playing- or walking conditions. Often, several (i.e., two or more) main studs will be arranged on the bottom surface of the outsole, but the case of only one main stud is also covered. If several main studs are present, they can be arranged more or less randomly across the bottom surface, or they can be arranged according to a specific pattern or scheme which can, e.g., be tailored to the intended field of use of the outsole and shoe (more details on this option will follow below).

On the peripheral surface, (at least) one additional stud is arranged, called the first peripheral stud for definiteness. Again, several (i.e., two or more) peripheral studs are also possible, as will be discussed below. This peripheral stud adds to the "conventional" stud or studs arranged on the bottom surface of the outsole, to provide improved traction, for example, also in the above-described scenarios of extreme kicking positions and/or sudden and sharp changes of direction. In these cases, the foot will typically be strongly tilted onto one of its sides and hence no longer rest exclusively on the bottom surface of the outsole but also at least partly on the peripheral surface of the outsole. The first peripheral stud can then engage and/or penetrate the ground and thus provide the desired improved traction also under these conditions.

Generally, therefore, when a shoe with an inventive outsole is used on a flat piece of ground under normal walking conditions, the tips of the peripheral stud(s) will not engage and/or penetrate the ground while the tips of at least some of the main stud or studs will do and support the outsole and thus the wearer above them. Only when the shoe is rolled or tilted upon one of its edges will the tips of the peripheral stud(s), if present on this side of the outsole, get in contact with the ground, and engage and/or penetrate the ground surface. This "experiment" is also one possibility to determine which part or parts of the outsole qualify as the bottom surface containing the main stud(s), and which part or parts qualify as the peripheral surface with the peripheral stud(s).

The tip of the first main stud and the tip of the first peripheral stud are linked by a bridge portion. The tips of the first main stud and the first peripheral stud are thus not completely isolated from one another but have a connection, which may be provided, e.g., in the form of a "mountain crest" or "mountain ridge" between the two stud tips and which bridges that gap that would otherwise be present between the two stud tips. A bridge portion connecting the two stud tips in the form of a rod or bar or an actual bridge, i.e., without contact to the outsole portion above it, is also conceivable, however.

The two stud tips can, for example, be formed as an integral part together with their bridge portion and all be made from the same material.

The two stud tips and the bridge portion may be made from a different material than the underlying stud bases and/or the rest of the outsole (e.g., an outsole base plate).

The two stud tips and the bridge portion may, for example, be made from a harder and/or more durable material than the underlying stud bases and/or the rest of the outsole (e.g., an outsole base plate), because they need to be more abrasion-resistant during ground contact, while an outsole base plate on which the studs are arranged may need to be sufficiently flexible to allow for the desired performance of the sole during use.

However, it is also possible for the outsole base plate to be made from a harder and/or stiffer material as the material used for the stud tip(s), and therefore provide more rigidity and responsiveness.

Moreover, the linked stud tips can be placed in a mold before injection-molding the rest of the outsole during an injection-molding manufacturing process and, due to their integral construction as a single unit, provide for the advantage of better positioning of the first peripheral stud in relation to the first main stud, which leads to an easier manufacturing process and to a better performance of the outsole compared to existing constructions.

To summarize, as mentioned in the beginning, for example when kicking a football in extreme positions, it is often the case that conventional studs are not in complete or sufficient contact with the ground. The present invention therefore provides at least one additional anchor point in the form of the first peripheral stud to improve traction when in such extreme positions, whilst not detracting from open play and "normal" movements. At the same time, the invention also allows for a simplified method of manufacture compared to existing injection-molding processes, by virtue of the fact that the stud tips of the first main- and peripheral stud are linked by a bridge portion.

The first peripheral stud can lie adjacent to the first main stud.

In principle, there could also be one or more "interjacent" studs in the region between the first main- and the first peripheral stud. The bridge portion connecting the first main- and the first peripheral stud tips could then also form a rib or bulge across part of the bottom surface of the outsole and act as an additional traction element and/or as a reinforcing element for the outsole, e.g., to increase the bending stiffness or torsional stiffness of the outsole. In a preferred case, however, the pair of two connected stud tips are "direct neighbors" of one another, which promotes the above-discussed advantages of the present invention, particularly with regard to ease of manufacture.

Moreover, although reference will from now on be made to "pairs" of main- and peripheral stud tips linked by a respective bridge portion - for simplicity of exposition - it is emphasized that a stud tip for a peripheral stud may also be linked to more than one stud tip for corresponding main studs by a bridge portion or bridge portions, and that, *vice versa,* a stud tip for a main stud may also be linked to more than one stud tip for corresponding peripheral studs by a bridge portion or bridge portions. For example, one peripheral stud tip may be linked to two main stud tips by two bridge portions in a "triangular" arrangement, and/or one main stud tip may be linked to two peripheral stud tips by two bridge portions in a "triangular" arrangement.

The outsole can further comprise a second main stud disposed on the bottom surface of the outsole and a second peripheral stud disposed on the peripheral surface of the outsole, wherein a tip of the second peripheral stud and a tip of the second main stud are linked by a second bridge portion. The second peripheral stud can, in particular, lie adjacent to the second main stud.

The outsole can also include a third main stud disposed on the bottom surface of the outsole and a third peripheral stud disposed on the peripheral surface of the outsole, wherein a tip of the third peripheral stud and a tip of the third main stud are linked by a third bridge portion. And so on for a fourth pair of bridged stud tips, a fifth pair of bridged stud tips, and further pairs of bridged stud tips.

Alternatively, or in addition, the outsole can also include a further main stud or studs disposed on the bottom surface of the outsole but without a corresponding peripheral stud (for example, one or more main studs arranged in a central region or regions of the bottom surface of the outsole), and/or the outsole can also include a further peripheral stud or studs disposed on the peripheral surface of the outsole which are not connected by a bridge portion to any of the main stud or studs of the outsole (see, for example, the discussion about the optional heel stud that follows below).

Further still, bridged connections among the tips of some of the main studs are also possible, as are bridged connections among the tips of some of the peripheral studs.

A base of the first main stud and a base of the first peripheral stud can be at least partly merged. A base of the second main stud and a base of the second peripheral stud can also be at least partly merged. Moreover, the same can be true for the bases of any further pair or pairs of main- and peripheral studs, in particular those having bridged stud tips, that may be present on the outsole.

Such a merging of the stud bases can, for example, complement and support the bridge portion between the tips of the respective pair of main- and peripheral studs, to further promote the advantageous effects of the bridge portion that have already been discussed above. The merged bases might even create the bridge portion in some embodiments, although generally the stud bases and corresponding stud tips may be made from different materials and in different manufacturing steps, and the presence of a dedicated bridge portion between the pair of tips, in particular a bridge portion provided as a one-piece construction with the pair of stud tips and made of the same material as the stud tips, may be preferred.

The first peripheral stud and/or the second peripheral stud can be arranged on a lateral side of the outsole. The same can be true for any or all of the further peripheral studs, if present.

Peripheral lateral studs (i.e., on the lateral side of the foot), are useful because additional studs on the medial side tend to interfere with regular play, thus impeding the wearer during some running- or kicking movements. Particularly for the game of football/soccer, kicking is often done with the medial instep surface of the shoe, whereby additional cleats in this region may interfere with striking the ball.

However, a peripheral stud or studs on the medial side are by no means ruled out by the present disclosure. For example, a peripheral stud or studs on the medial side may be provided in the form of "surface texture studs" (i.e., a stud or studs of smaller size that mainly serve to improve ball handling, not traction on the ground) which will be discussed in some more detail below.

The first peripheral stud and/or the second peripheral stud can be arranged in a forefoot region of the outsole. The same can be true for any or all of the further peripheral studs, if present.

A placement of the peripheral stud or studs in a forefoot region of the foot (not too near to the toes, but also not too near to the midfoot), particularly if on the lateral side of the outsole, can be advantageous, as placement in other regions of the foot has turned out to be potentially counterproductive for kicking movements.

A central axis of the first peripheral stud can be tilted in relation to a central axis of the first main stud, and/or a central axis of the second peripheral stud can be tilted in relation to a central axis of the second main stud. The same may be true for any or all of the further pairs of main- and peripheral studs, if present.

As mentioned above, the tips of the peripheral stud(s) will usually only engage and/or penetrate the ground if the shoe is tilted onto its corresponding edge, e.g., during extreme kicking positions or sudden changes of direction. This tilting changes the spatial orientation of the sole with respect to the ground and by tilting the central axis of the peripheral stud or studs accordingly, this can be accounted for such that the peripheral stud still properly engages the ground in the tilted sole position. For example, the tilt of the central axis of the respective peripheral stud can be chosen such that the peripheral stud still pushes into the ground more or less vertically along its central axis (directly downwards into the ground) in the tilted sole position during the mentioned scenarios of extreme kicks or sudden changes of direction. If the central axis of the peripheral stud were parallel to the associated main stud, on the other hand, the grip provided by the peripheral stud could be less ideal compared to a tilted peripheral stud axis.

A suitable tilt between the respective axes can for example be around 5°, or around 10°, or around 20°, or around 30°, or around 40°, or around 50°, or around 60°, and can generally be dependent on the specific position of the peripheral stud on the outsole (e.g., the farther away from its associated main stud, the larger the tilt). As a specific example, a tilt of around 42° has turned out beneficial to achieve the above-discussed advantages.

The outsole can further comprise at least a first, a second, and a third row of studs counted from a front tip of the outsole, wherein the first main stud and the first peripheral stud are included in the second row of studs, and wherein the second main stud and the second peripheral stud are included in the third row of studs.

Other patterns or arrangements (e.g., circular arrangements) of the studs (particularly the main- and/or peripheral studs) across the outsole are also possible, as already mentioned briefly above, and not all of the studs need to follow such an arrangement, but individual studs may also be "outliers" that may be placed in particular positions on the outsole where additional traction is needed or desirable during use.

However, an organization and placement of the studs in the form of rows (wherein a row need not necessarily be a perfectly straight line, and, although possible, a given row need also not necessarily be perpendicular to a central longitudinal axis of the outsole, as long as a general grouping or organization of the studs into several distinct rows is discernible) that are arranged generally crosswise across the outsole from front to back can be beneficial, as this may accommodate to the fact that quite often the contact region of a sole with the ground (at least during "normal" playing- or walking conditions) can be more or less represented as a strip-like area across the sole that moves from the heel towards the tip of the sole during a gait cycle. By arranging the studs in crosswise rows (e.g., rows containing two or three main studs), the rows engage the ground one after another during this rolling motion of the foot, hence providing good traction and stability at each point in time during the motion. Including the peripheral studs with the second and third of these rows (counted from the front end of the sole), particularly lateral peripheral studs on the second and/or third row, can combine this advantageous general stud arrangement with the above-mentioned beneficial option of having the peripheral studs in a preferred region (see also the discussion of the third that follows below) that lies generally in the forefoot region of the outsole, but not too far forward or backward to avoid counterproductive effects during kicking motions.

The tip of the first main stud, the tip of the first peripheral stud and the first bridge portion can be formed as an integral piece from a common material. The tip of the second main stud, the tip of the second peripheral stud and the second bridge portion can also be formed as an integral piece from a common material. The same can be true for any or all further pairs of main- and peripheral studs and corresponding bridge portions, if present.

As already hinted at above, such a one-piece construction from a common material may not only improve the durability and performance properties of the outsole and the shoe, it may also facilitate the manufacture, in particular the correct placement of the main- and peripheral stud tips into the mold during manufacture, e.g., during an injection-molding process. It also allows using a harder and/or more durable material for the stud tips compared to the underlying stud bases and outsole, which can be beneficial because the stud tips are subject to particularly high wear during use of the sole and shoe.

On the other hand, it also allows using a softer material for the stud tips compared to the underlying stud bases and outsole, for example, in case a full-length outsole or outsole base plate which uses a stiffer and more brittle material is used, for example, to provide more rigidity and responsiveness.

Herein, all one-piece units of linked pairs of stud tips plus corresponding bridge portion can comprise or be comprised of the same common material, or the material composition can vary between some or all such units, so that the material composition and resulting properties can be tailored to the location of a given unit on the outsole.

The first peripheral stud and/or the second peripheral stud (and/or any or all further peripheral studs, if present), particularly their stud tips, may have a generally triangular shape, preferably wherein two corners are pointing outwards and one corner is pointing inwards.

"Generally triangular" may be understood, for example, to mean that the shape of the stud or stud tip (e.g., the shape in a cross-sectional plane perpendicular to a central axis of the stud) has three pronounced corners, but the shape need not necessarily be a triangle in the mathematical sense with perfectly straight edges (rather, the edges could, e.g., also be convexly and/or concavely curved).

Such a generally triangular shape, wherein two corners are pointing outwards (e.g., away from a center of the outsole or away from a central longitudinal axis of the outsole) and one inwards (e.g., towards a center of the outsole or towards a central longitudinal axis of the outsole), can help to support a smooth rolling-off movement of the foot when tilting onto a side-edge (e.g., when the stance foot is tilting laterally during extreme kicks or sudden changes of direction), with the inward edge of the stud engaging and/or penetrating the ground first and the two outer edges providing the greatest ground contact area in the most extreme angle that may only be reached later during the movement cycle. The orientation of each of the peripheral studs may also be individually selected and adjusted in this regard, to take account of the typical ways and situation in which a respective peripheral stud will contact the ground and of the particular location of that stud on the outsole. The triangular shape also facilitates ground penetration by the stud, since this shape comprises a comparatively small surface contact area (compared, for example, to rectangular stud shapes), leading to a high pressure being applied by the stud tip to the ground surface. In particular, the inward edge of the stud, which engages and/or penetrates the ground first when tilting onto a side-edge, comprises a comparatively small surface contact area.

The outsole can further comprise at least one additional heel stud, which is also arranged on the peripheral surface of the outsole, in the heel region of the outsole.

Such a heel stud can serve as an additional anchor point and provide further traction to help avoid slipping of the foot, e.g., when the wearer is taking a long step forward and contacts the ground in the heel area of the shoe and not actually with the bottom part of the sole.

The additional heel stud can lie adjacent to one of the main studs on the bottom surface of the outsole, and a central axis of the additional heel stud can be tilted in relation to a central axis of this adjacent main stud.

Similar to the corresponding discussion above, such a tilting of the central axis of the heel stud can take account of the fact that the foot will often be in a tilted position (e.g., toes up and heel down if the wearer takes a long step forward) in situations when the heel stud actually engages the ground, and the tilting can be chosen such that in these cases the heel stud still engages more or less vertically with the ground.

The additional heel stud can lie adjacent to one of the main studs on the bottom surface of the outsole, but a tip of the additional heel stud and a tip of the adjacent main stud may not be linked by a bridge portion. If a highly-precise placement of the heel stud in relation to the adjacent main stud and/or other studs of the outsole is not necessary, this may simplify manufacture. It may also allow making the entire heel stud as one piece, e.g., without a dedicated stud tip, which may be sufficient for this particular stud and which may again simplify manufacture.

However, the tip of the additional heel stud and the tip of the adjacent main stud may also be linked by a bridge portion, if deemed beneficial, for example, to ensure a more precise placement of the additional heel stud and/or to improve the overall robustness of the construction.

A ground-facing surface of the tip of the additional heel stud can further be tilted with respect to heel stud's central axis, so that the ground-facing surface is not arranged orthogonal to the central axis but, preferably, tilted towards the ground, so that the surface of the tip of the heel stud is (essentially) parallel to the ground when the outsole rest flat on the ground, i.e., before the central axis of the heel stud stands vertically during movement of the foot and outsole, for example, during a step forward.

Alternatively, or in addition, the posterior side of the heel stud (the side of the heel stud that faces rearwards/towards the rear end of the outsole) can be (essentially) vertical when the outsole rests flat on the ground. In this manner, the necessity for an undercut for the heel stud in the injection mold could be avoided in the manufacture, which can facilitate demolding of the outsole from the injection mold.

The additional heel stud may, as an example, lie posterior (farther towards the rear end of the outsole) and superior (farther upwards or away from the ground) off-set compared to its associated, adjacent main stud, and the ground-facing surface of the tip of the additional heel stud can be arranged essentially parallel to the ground when the outsole rests flat on the ground.

The outsole can comprise a forefoot part and a heel part which are separate from one another.

On the one hand, such a construction may, for example, provide increased flexibility of the shoe sole in the midfoot- and arch region of the shoe, which may be desirable for certain fields of application and certain kinds of sports. On the other hand, it may also have an advantageous effect on the complexity and cost-efficiency of the manufacturing process. For example, when used in combination with one or several additional heel studs as discussed above, an outsole construction having several (i.e., two or more) separate parts may allow the creation of the part with the heel stud(s) without the need for undercuts in the injection mold (possibly even without the posterior side of the heel stud being vertical), which are typically expensive to create and also increase the complexity of the manufacturing/injection process.

The outsole may also comprise more than two separate parts, for example three parts or four parts or five parts, and so on.

Also, any given outsole part need not necessarily be formed of a continuous sheet of material, but a given outsole part may also have a hole or holes in it, e.g., a ring-shaped outsole or outsole part is possible, to name just one example. Cut-outs, reinforcing ribs or bulges, changes in thickness, stiffness, material composition may be possible in different regions of the outsole or outsole parts, too. There may also be regions on the underside of the shoe or midsole in which no outsole or outsole part is arranged, for example in the region under the arch of the foot, as already mentioned above.

A second aspect is provided by an outsole for a shoe, in particular for a soccer shoe, which comprises a first main stud disposed on a bottom surface of the outsole, and a first peripheral stud disposed on a peripheral surface of the outsole, wherein the first peripheral stud has a generally triangular shape, preferably wherein two corners are pointing outwards and one corner is pointing inwards.

In the description and disclosure of this second aspect, the same expressions and terminology will be used as for the description and disclosure of the first aspect above, unless explicitly mentioned otherwise.

We also emphasize that all aspects, features, and options discussed and disclosed within the context of the first aspect may be applied to, or combined with, the disclosure about this second aspect, and *vice versa,* unless physically or technically ruled out, even if not every possible combination or sub-combination of features is explicitly spelled out in the following. The technical advantages of such options and features that have already been discussed above are therefore not repeated again, at least not to the same degree of detail, and reference is instead made to the corresponding explanations above, for conciseness.

The triangular shape of the first peripheral stud, facilitates, in particular, ground penetration by the first peripheral stud, and the arrangement of the corners allows for a smooth rolling motion onto the stud, as already explained above, reference to which is therefore made to avoid unnecessary repetitions.

In the outsole according to the present second aspect, a tip of the first main stud and a tip of the first peripheral stud can be linked by a first bridge portion. The first peripheral stud can lie adjacent to the first main stud. A base of the first main stud and a base of the first peripheral stud can be at least partly merged.

The outsole according to the second aspect may further comprise a second main stud disposed on the bottom surface of the outsole and a second peripheral stud disposed on the peripheral surface of the outsole, and a tip of the second peripheral stud and a tip of the second main stud can be linked by a second bridge portion. The second peripheral stud may lie adjacent to the second main stud. A base of the second main stud and a base of the second peripheral stud can be at least partly merged.

The first peripheral stud and/or the second peripheral stud can be arranged on a lateral side of the outsole. The first peripheral stud and/or the second peripheral stud can be arranged in a forefoot region of the outsole. A central axis of the first peripheral stud can be tilted in relation to a central axis of the first main stud, and/or a central axis of the second peripheral stud can be tilted in relation to a central axis of the second main stud. The outsole can comprise at least a first, a second, and a third row of studs, counted from a front tip of the outsole, and the first main stud and the first peripheral stud can be included in the second row of studs, and the second main stud and the second peripheral stud can be included in the third row of studs.

The tip of the first main stud, the tip of the first peripheral stud and the first bridge portion can be formed as an integral piece from a common material, and/or the tip of the second main stud, the tip of the second peripheral stud and the second bridge portion can also be formed as an integral piece from a common material.

The second peripheral stud may also have a generally triangular shape, preferably wherein two corners are pointing outwards, and one corner is pointing inwards.

The outsole according to the second aspect may further comprise at least one additional heel stud, which can also be arranged on the peripheral surface of the outsole. The additional heel stud can lie posterior and superior off-set compared to an adjacent main stud, and/or a ground-facing surface of a tip of the additional heel stud can be arranged essentially parallel to the ground when the outsole rests flat on the ground.

The outsole can further comprise a forefoot part and a heel part which are separate from one another.

A third aspect is provided by an outsole for a shoe, in particular for a soccer shoe, which comprises at least one peripheral lateral stud (i.e., one or more such studs) disposed on a lateral peripheral surface of the outsole, wherein the at least one peripheral lateral stud is disposed in a region of the lateral peripheral surface that lies in a forefoot part of the outsole, and wherein the region of the lateral peripheral surface in which the at least one peripheral lateral stud is disposed is spaced apart from a front tip of the outsole such that the region of the lateral peripheral surface in which the at least one peripheral lateral stud is disposed is arranged further rearwards than a first row of studs of the outsole, counted from the front tip of the outsole.

A lateral peripheral surface of the outsole can be understood, for example, as a peripheral surface of the outsole in the sense used throughout the present disclosure, with the additional requirement that it is (predominately) arranged on the lateral side of the outsole.

In the description and disclosure of this third aspect, basically the same expressions and terminology will again be used as for the description and disclosure of the first and second aspects above, unless explicitly mentioned otherwise.

We also once again emphasize that all aspects, features, and options discussed and disclosed above within the context of the first and/or second aspect may be applied to, or combined with, the discussion and disclosure of the present third aspect, and *vice versa,* unless physically or technically ruled out, even if not every possible combination or sub-combination of features is explicitly spelled out in the following. The technical advantages of such options and features that have already been discussed above are therefore not repeated, at least not to the same degree of detail, and reference is instead made to the corresponding explanations above, for conciseness.

The outsole according to the present third aspect may also comprise a further additional peripheral stud or further additional peripheral studs on the lateral peripheral surface in the forefoot part of the outsole which are, however, arranged outside of said region of the lateral peripheral surface and whose height is lower than that of the peripheral lateral stud or studs within said region (e.g., if there are several peripheral studs on the lateral peripheral surface both inside and outside of said region, the tallest one of the stud outside said region can be still smaller than the smallest one of the studs within said region). Alternatively, the lateral peripheral surface in the forefoot part of the outsole may not comprise any (i.e., be free of) peripheral studs outside said region of the lateral peripheral surface.

By having only a peripheral stud or studs of lower height outside said region of the lateral peripheral surface, or by having no peripheral studs there at all, negative effects that larger studs in such positions might have can be avoided, such as hampering the normal walking-, running- or kicking motions by the wearer, or even unintended engagement with the ground which might cause the wearer to stumble or fall.

Within said region of the lateral peripheral surface, there may be arranged at least two peripheral lateral studs, called the first and second lateral peripheral studs in the following, for definiteness. These may be, or comprise, the first peripheral stud and the second peripheral stud mentioned and disclosed within the context of the first and/or second aspect above. This correlation may apply in everything that follows, even if not explicitly pointed out again.

The outsole may further comprise a first main stud disposed on a bottom surface of the outsole, and it may also comprise a second main stud disposed on the bottom surface of the outsole. These may be the first main stud and the second main stud mentioned and disclosed within the context of the first and/or second aspect above, and this correlation may again apply in everything that follows, even if not explicitly pointed out again.

The outsole may, in addition to the first row of studs, comprise at least a second and a third row of studs (see also the corresponding discussion within the context of the first aspect above), counted from the front tip of the outsole, and the first main stud and a first one of said peripheral lateral studs, e.g., the above-mentioned first peripheral lateral stud, can be included in the second row of studs, and the second main stud and a second one of said peripheral lateral studs, e.g., the above-mentioned second peripheral lateral stud, can be included in the third row of studs.

Also in the outsole according to the present third aspect, a tip of the first peripheral lateral stud and a tip of the first main stud can be linked by a first bridge portion. The first peripheral lateral stud may again lie adjacent to the first main stud. A tip of the second peripheral lateral stud and a tip of the second main stud can also be linked by a second bridge portion. The second peripheral lateral stud can lie adjacent to the second main stud. A base of the first main stud and a base of the first peripheral lateral stud can be at least partly merged, and/or a base of the second main stud and a base of the second peripheral lateral stud can be at least partly merged.

A central axis of the first peripheral lateral stud can be tilted in relation to a central axis of the first main stud, and/or a central axis of the second peripheral lateral stud can be tilted in relation to a central axis of the second main stud.

The tip of the first main stud, the tip of the first peripheral lateral stud and the first bridge portion can be formed as an integral piece from a common material. The tip of the second main stud, the tip of the second peripheral lateral stud and the second bridge portion can also be formed as an integral piece from a common material.

The first peripheral lateral stud and/or the second peripheral lateral stud can have a generally triangular shape, preferably wherein two corners are pointing outwards and one corner is pointing inwards.

The outsole according to the present third aspect can further comprise at least one additional heel stud, which can be arranged on a heel peripheral surface of the outsole. The additional heel stud can lie posterior and superior off-set compared to an adjacent main stud, and/or a ground-facing surface of a tip of the additional heel stud can be arranged essentially parallel to the ground when the outsole rests flat on the ground. The outsole may further comprise a forefoot part and a heel part which are separate from one another.

In all of the outsole options discussed above, i.e., within an outsole according to the first, second and/or third aspect, a contact surface of the first peripheral (lateral) stud can be smaller than a contact surface of the (associated) first main stud. The same might apply to the second peripheral (lateral) stud in comparison to the (associated) second main stud. It might even hold for the contact surface of any one of the peripheral studs when compared to any one of the main studs.

Alternatively, or in addition, in all of the outsole options discussed above, i.e., within an outsole according to the first, second and/or third aspect, one or several studs of comparatively smaller size (compared, for example, to the size or average size of the main stud or studs of the outsole), could be arranged on the medial peripheral surface of the outsole, for example adjacent to the base of a corresponding main stud or studs. Such studs will be called "surface texture studs" in the following. These surface texture studs may primarily serve to create a surface texture that provides additional grip for ball control when playing the ball with the medial side, and not for improving traction on the ground. The surface texture studs could be integrated into and/or made from the same material and in the same injection-molding step as the outsole base plate, for example, and therefore not comprise a dedicated stud tip, for ease of manufacture.

A fourth aspect relates to a shoe, in particular a soccer shoe, comprising an outsole according to the first, second, and/or third aspect.

In the outsole of such a shoe, any or all of the described embodiments, options and features of the first, second and/or third aspect can be combined to obtain the desired playing- and performance characteristics for the shoe, even if not all such possible combinations have been explicitly mentioned and discussed above. Individual features or sub-features can also be omitted, if deemed dispensable to obtain the desired result.

A fifth aspect is provided by a method for the manufacture of an outsole according to the first aspect. The method may also be used for the manufacture of an outsole according to the second and/or third aspect discussed above, and/or within the manufacture of a shoe according to the fourth aspect, as far as applicable. The method may comprise the following steps: (A) providing pre-fabricated stud tips for a first main stud and a first peripheral stud which are linked by a first bridge portion, (B) placing the pre-fabricated stud tips into a mold, and (C) after the pre-fabricated stud tips are placed into the mold, injection-molding at least part of the outsole. Herein, the pre-fabricated stud tips for the first main stud and the first peripheral stud as well as the first bridge portion may be provided as an integral piece made from a common material.

As already discussed, an advantage of providing the stud tips in this manner, i.e., pre-fabricated, linked by a bridge portion, and, preferably, of a one-piece-construction made from a common material, is that it simplifies the correct placement of the stud tips within the mold, which may be more difficult otherwise, in particular, if the central axes of the main- and peripheral stud are tilted with respect to each other. Put differently, the bridge portion not only helps to improve the overall stability and performance of the finished outsole, but also "keeps the tips in place" during manufacture. Since the stud tips are often made from a different material than the rest of the outsole, this approach therefore simplifies the manufacture while still leading to a high-quality and durable end product. As mentioned, the stud tips may, for example, be made from a harder and/or more durable material than the underlying outsole structure, as may be the bridge portions.

Also, if no pre-fabricated stud tips were used, a dual-mold injection process would have to be used to obtain, for example, stable studs with durable stud tips form-wise and material-wise, particularly if the tips were to be made from a different material than the rest of the outsole. Such a dual-mold injection process could significantly increase manufacturing complexity and expenses.

The method may further comprise the step of providing pre-fabricated stud tips for a second main stud and for a second peripheral stud that are linked by a second bridge portion and placing them into the mold prior to the injection-molding in step (C), wherein the pre-fabricated stud tips for the second main stud and the second peripheral stud as well as the second bridge portion may again be provided as an integral piece made from a common material. The same may be true for a third pair of bridged main- and peripheral stud tips, a fourth pair, a fifth pair, and so on.

The method may also comprise providing a further pre-fabricated stud tip or tips (e.g., a stud tip or tips not linked to any other stud tip or tips by a bridge portion), in particular for a further main stud or studs, and/or for an additional heel stud or studs, and placing these pre-fabricated stud tip or tips into the mold prior to the injection-molding in step (C).

Also, for a further peripheral stud or studs, such individual pre-fabricated stud tip or tips may be provided and placed into the mold before step (C), i.e., the injection-molding.

Still further, alternatively, or in addition, the method may comprise injection-molding a stud or studs which do not comprise any pre-fabricated stud tip or tips during step (C), for example a stud or studs on or towards the medial side of the outsole, which may not need to be as hard and durable as the studs towards the lateral side of the outsole, because on the medial side they experience less load and wear during play.

For example, one or several studs of comparatively smaller size ("surface texture studs") compared, e.g., to the (average) size of the main stud or studs of the outsole, could be added in step (C) to the medial peripheral surface of the outsole, for example, adjacent to the base of a corresponding main stud or studs, which primarily serve to create a surface texture that provides additional grip for ball control when playing the ball with the medial side, and not for improving traction on the ground.

In the method, the pre-fabricated pair of stud tips for the first main- and peripheral studs and/or for the second main- and peripheral studs (and/or for any or all further pairs of main- and peripheral studs) can be held in place by a slider element or slider elements of the mold during at least part of the injection-molding process.

By virtue of the respective pair of main- and peripheral stud tips being connected by the bridge portion, keeping them in place is facilitated and a simple slider element may therefore suffice for this purpose, e.g., a slider element placed over the bridge portion which secures the bridge portion, and hence the corresponding pair of stud tips, in place. If the main- and peripheral tips were completely separate parts, each needed to be individually positioned and secured within the mold, leading to increased manufacturing complexity and effort.

The injection-molding in step (C) can comprise an injection-molding of a material comprising one or more of: a thermoplastic elastomer (TPE) material, a polyamide (PA) material, a polyurethane (PU) material, for example, polyetherblockamide (PEBA), polyamide 11 (PA11), polyamide 12 (PA12), and/or thermoplastic polyurethane (TPU). Other materials or material mixtures are also possible. These materials may, in particular, be used to form the outsole base plate, the stud bases and/or the surface texture studs.

For example, PA12 combines good performance properties with regard to the finished outsole with a good processing window and may hence be a preferred choice for the outsole base plate, stud bases and/or surface texture studs.

For the pre-fabricated stud tips and/or the bridge portions, the following materials may, for example, have been used alone or in combination: a thermoplastic elastomer (TPE) material, a polyamide (PA) material, a polyurethane (PU) material, for example, polyetherblockamide (PEBA), polyamide 11 (PA11), polyamide 12 (PA12), or thermoplastic polyurethane (TPU), for example TPU with a 95A Shore Hardness.

We point out that the material choices and options mentioned in the three preceding paragraphs also apply to an outsole according to the first, second and/or third aspect discussed and disclosed above, as well as to a shoe with such an outsole according to the fourth aspect discussed and disclosed above.

The pre-fabricated stud tips and bridge portions may, for example, have been manufactured by injection molding in a separate manufacturing run, using a dedicated mold for the stud tips and bridge portions.

### 4. Brief description of the figures

Possible embodiments of the present invention are described in more detail below with reference to the following figures:
- **Figs. 1a-j:**: Shoe and outsole with main- and peripheral studs.
- **Figs. 2a-d:**: Schematic drawings of a pair of pre-fabricated stud tips for a main- and peripheral stud and their potential arrangement on an outsole.
- **Fig. 3:**: Schematic diagram of a manufacturing method.

### 5. Detailed description of possible embodiments

Possible embodiments of the different aspects of the present disclosure are described below, predominately with respect to soccer shoes. It is, however, once again emphasized that the different aspects may also be practiced in different kinds of soles and shoes and are not limited to the specific embodiments set forth below.

Reference is further made to the fact that in the following only individual embodiments can be described in more detail. The skilled person will understand that the features and possible modifications described with reference to these specific embodiments may also be further modified and/or combined with one another in a different manner or in different sub-combinations, without departing from the scope of the present disclosure. Individual features or sub-features may also be omitted if they are dispensable to obtain the desired result. In order to avoid redundancies, reference is therefore made to the explanations in the preceding sections, which also apply to the following detailed description.

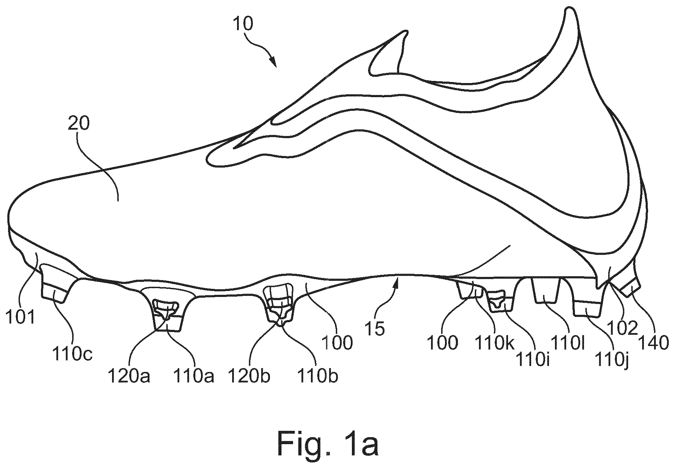

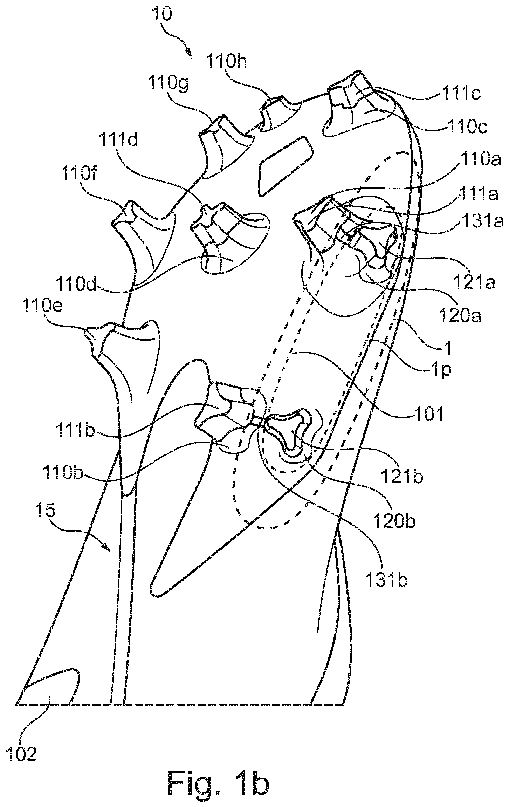

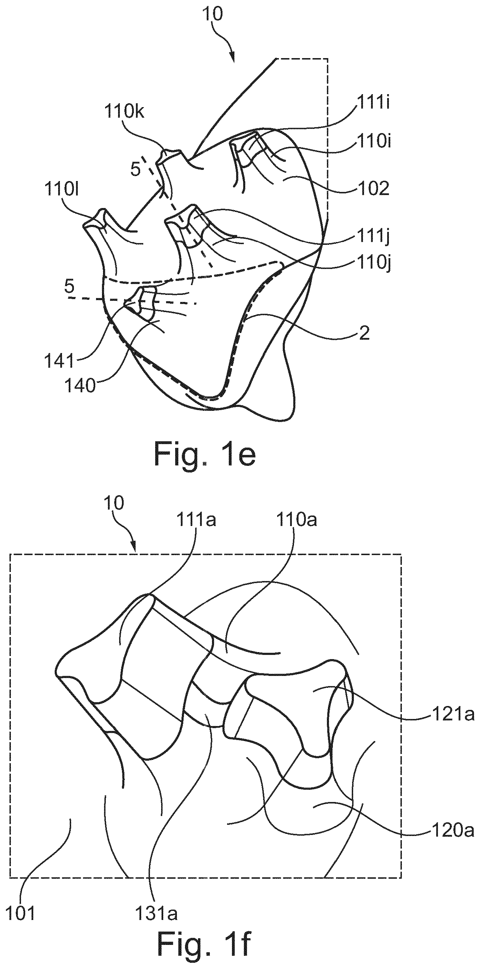

**Figs. 1a****-j** show an embodiment of a shoe **10**, particularly a soccer shoe **10**, with an outsole **100.** The shoe **10** also comprises an upper **20,** which will not be discussed in further detail herein, onto which the outsole **100** is mounted (s., e.g., **Figs. 1b** and **1e****).**

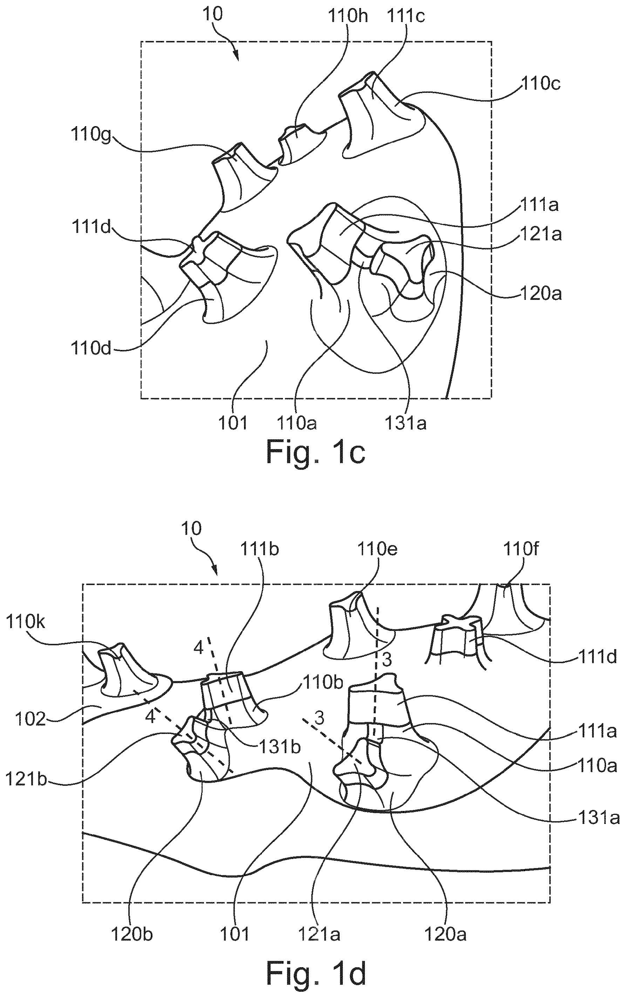

**Fig. 1a** shoes the complete shoe **10**, with the lateral side of the shoe **10** facing the reader. **Fig. 1b** shows the forefoot- and midfoot region of the bottom side of the shoe **10**, with the lateral side of the shoe **10** facing towards the right side of the picture. **Fig. 1c** shows an enlarged image of the tip of the bottom side of the shoe **10,** and **Fig. 1d** shows an enlarged image of the lateral side edge of the bottom side of the shoe **10.**

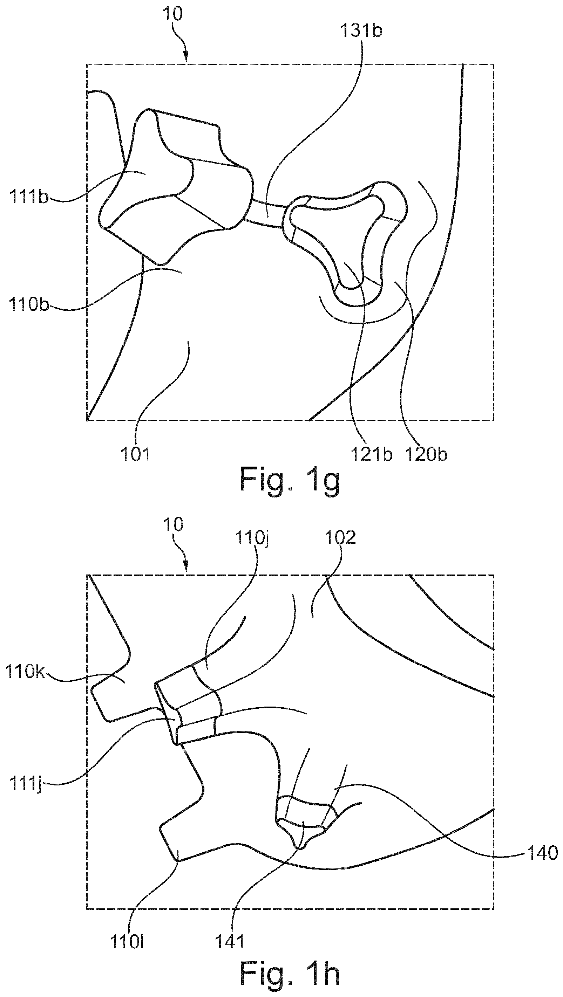

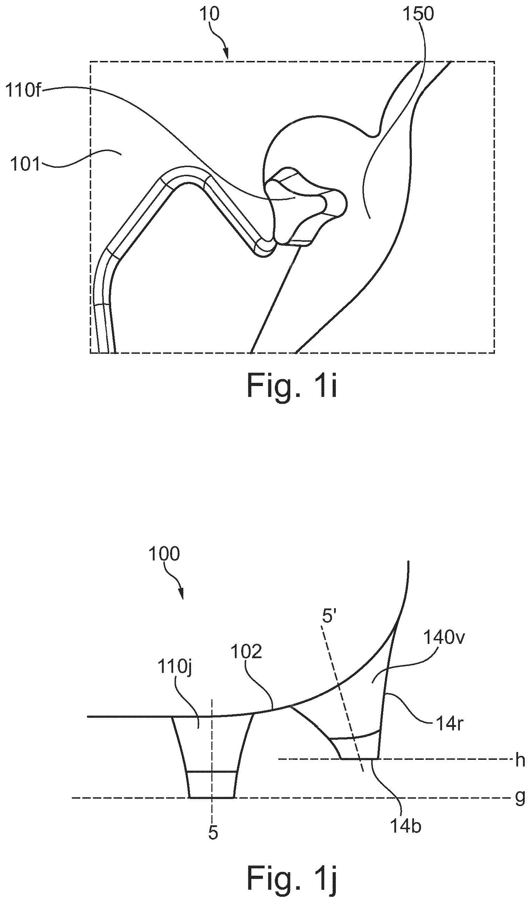

**Fig. 1e** shows the heel region of the bottom side of the shoe **10**, again with the lateral side of the shoe **10** facing towards the right side of the picture. **Figs. 1f** and **1g** show enlarged images of a pair of main- and peripheral studs having stud tips that are linked by a bridge portion, and **Fig. 1h** shows an enlarged image of two studs with stud tips that are not linked by a bridge portion. **Fig. 1i** shows a possible modification of the shoe **10** including a surface texture stud on the medial peripheral surface, and **Fig. 1j** shows a further possible modification of the shoe **10** with regard to the design of the heel stud.

As can be seen, for example, in **Figs. 1b****,** **1d** and **1e****,** the outsole **100** comprises two outsole base parts, or "outsole base plates", namely a forefoot part **101** and a heel part **102** which are separate from one another. Both parts **101, 102** comprise a base formed of an injection molded material, in the present embodiment a transparent injection-molded thermoplastic polyurethane (TPU), on which the studs (or cleats) that will be discussed in the following are arranged. The base could also be made of a different injection molded material, for example a thermoplastic elastomer (TPE) material, a polyamide (PA) material, and/or a polyurethane (PU) material, for example, polyetherblockamide (PEBA), polyamide 11 (PA11), and/or polyamide 12 (PA12) .

As can also be seen, for example, in **Figs. 1b** and **1e****,** there is no outsole part arranged underneath the upper **20** in the arch region **15** of the shoe **10**, such that this region retains a higher degree of flexibility (e.g., compared to the regions where the outsole **100** is arranged), which may be desirable in order to not impede the natural movements of the foot during use and play, and to facilitate a comfortable wearing sensation of the shoe **10.**

On the bottom surface of the forefoot- and heel parts **101, 102,** main studs (or cleats) **110a - 110l** are arranged. In addition, on a lateral peripheral surface of the forefoot part **101,** which is schematically indicated in **Fig. 1b** by the dashed line **1,** a first- and a second peripheral stud **120a** and **120b** are arranged. Further, on a heel peripheral surface of the heel part **102** of the outsole **100,** which is schematically indicated in **Fig. 1e** by the dashed line **2,** a heel stud **140** is arranged.

The main studs **110a, 110b, 110c, 110d, 110i** and **110j** as well as the peripheral studs **120a, 120b** and the heel stud **140** comprise dedicated stud tips **111a, 111b, 111c, 111d, 111i, 111j** as well as **121a, 121b** and **141,** which comprise a different material than the corresponding stud bases that are made of the same injection-molded material as the outsole base parts **101, 102.** In the present embodiment, the dedicated stud tips **111a, 111b, 111c, 111d, 111i, 111j** as well as **121a, 121b** and **141** are all made from thermoplastic polyurethane (TPU) with a 95A Shore Hardness. However, more generally, one or more of the following materials could be used: a thermoplastic elastomer (TPE) material, a polyamide (PA) material, a polyurethane (PU) material, for example, polyetherblockamide (PEBA), polyamide 11 (PA11), polyamide 12 (PA12), or thermoplastic polyurethane (TPU), for example TPU with a 95A Shore Hardness.

On the other hand, the main studs **110e, 110f, 110g, 110h** and **110l, 110k** on the medial side of the outsole **100** (s., e.g., **Figs. 1b** and **1e**) do not comprise dedicated stud tips but have been integrally provided with the forefoot- and heel parts **101** and **102** of the outsole **100** in the respective injection-molding process of these parts. This is also true for the stud bases of the above-mentioned studs **110a-d, 110i-j, 120a-b** and **140,** but not for their tips **111a-d, 111i-j, 121a-b** and **141** as just mentioned above.

In a possible variation of the shoe **10** and outsole **100,** as shown in **Fig. 1i**, one or more surface texture studs **150** may be added on the medial peripheral surface adjacent to an associated main stud, for example, adjacent to one of the main studs **110e, 110f** and/or **110g,** in the exemplary case of **Fig. 1i** adjacent to the main stud **110f,** which are a stud or studs of comparatively smaller size (e.g., compared to the main studs, as can be seen in **Fig. 1i****),** which mainly serve to improve ball handling and ball control, and not traction on the ground. The surface texture stud(s) **150** may be integrally formed with the respective part of outsole base plate, or they may comprise a dedicated material composition that may differ from that of the outsole base plate.

The stud tip **111a** of the main stud **110a,** which is located on the bottom surface of the forefoot part **101** of the outsole **100,** and the stud tip **121a** of the peripheral stud **120a,** which is located on the lateral peripheral surface **1** of the forefoot part **101** of the outsole **100** and lies adjacent to the main stud **110a,** are linked by a bridge portion **131a.** The stud tips **111a** and **121a** together with their bridge portion **131a** have been integrally provided as a single piece and have been made from a common material, in the embodiment shown here from TPU. However, as already mentioned, more generally one or more of the following materials may be used: a thermoplastic elastomer (TPE) material, a polyamide (PA) material, a polyurethane (PU) material, for example, polyetherblockamide (PEBA), polyamide 11 (PA11), polyamide 12 (PA12), or thermoplastic polyurethane (TPU), for example TPU with a 95A Shore Hardness. This may, e.g., be accomplished in an injection-molding process prior to them being inserted into an injection mold in which the remainder of the outsole **100** is made (more details on manufacturing methods and options will follow below). The stud tips **111a** and **121a** together with their bridge portion **131a** hence form a constructional unit, which, among other things, simplifies the manufacture of the outsole **100**.

In a similar manner, the stud tip **111b** of the main stud **110b,** which is located on the bottom surface of the forefoot part **101** of the outsole **100,** and the stud tip **121b** of the peripheral stud **120b,** which is located on the lateral peripheral surface **1** of the forefoot part **101** of the outsole **100** and lies adjacent to the main stud **110b,** are also linked by a bridge portion **131b.** The stud tips **111b** and **121b** together with the bridge portion **131b** have again been integrally provided as a single piece and have been made from the same common material, for example TPU (or one or several of the above-mentioned materials), for example in an injection-molding process prior to them being inserted into the injection mold in which the remainder of the outsole **100** is made. The stud tips **111b** and **121b** together with their bridge portion **131b** hence also form a constructional unit.

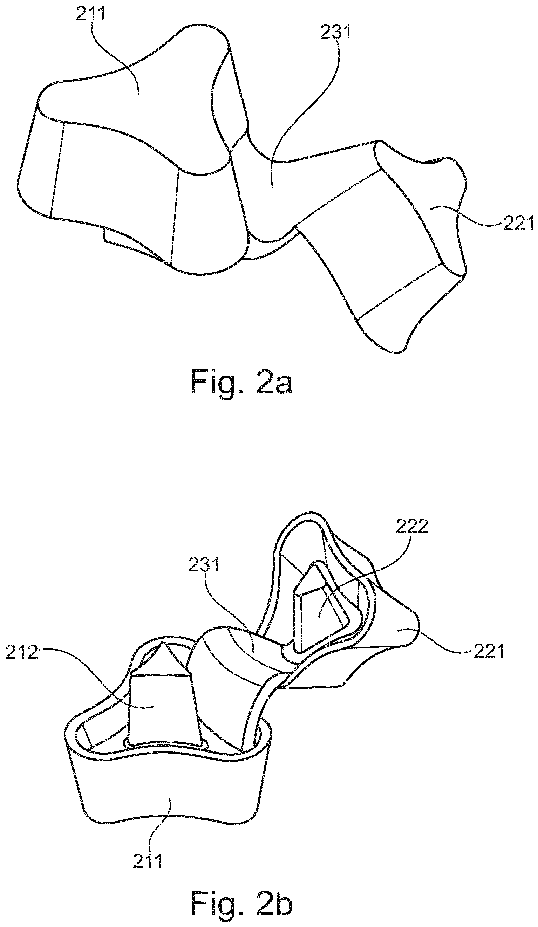

The bridge portions **131a** and **131b** form a "mountain crest" or "saddle" between the "peaks" provided by the stud tips **111a, 121a** and **111b, 121b,** respectively, in the present embodiment (s. also **Figs. 2a****-d** for more details in this regard).

To complement and support the bridge portion **131a,** the base of the first main stud **110a** and the base of the first peripheral stud **120a** are at least partly merged, as can, e.g., be seen in **Figs. 1b****,** **1c**, **1d** and **1f**.

In a similar manner, to complement and support the bridge portion **131b,** the base of the second main stud **110b** and the base of the second peripheral stud **120b** are also at least partly merged, as can, e.g., be seen in **Figs. 1b****,** **1d** and 1**g.**

Contrary to the situation with the lateral forefoot peripheral studs **120a** and **120b** and their adjacent main studs **110a** and **110b,** however, the heel stud **140** and the adjacent main stud **110j** do not have stud tips that are connected by a bridge portion. Rather, as can, e.g., be seen in **Fig. 1e**, the stud tip **141** of the heel stud **140** and the stud tip **111j** of the main stud **110j** are disconnected and separate from one another. Also, the stud bases of the studs **110j** and **140** are not (noticeably) merged.

However, both the first- and second peripheral studs **120a** and **120b** as well as the heel stud **140** have tilted central axes compared to their adjacent main studs **110a, 110b** and **110j,** respectively, see, e.g., **Figs. 1d** and **1e** where the central axes have been schematically indicated by pairs of dotted lines (s. reference numerals **3, 4** and **5).** The tilt for each of the studs **120a, 120b, 140** compared to their adjacent main stud **110a, 110b, 110j** is chosen such that the stud will engage the ground more or less vertically once the shoe **10** is tilted onto the respective side. For example, a suitable tilt may be a tilt of around 5°, or around 10°, or around 20°, or around 30°, or around 40°, or around 50°, or around 60°, and the degree of tilt may depend on the specific position of the respective peripheral stud on the outsole. As a specific example, a value of 42° of tilt has turned out beneficial.

For example, if the shoe **10** is worn on the stance foot of a soccer player executing a curve kick with their other foot, the shoe **10** will be tilted onto the lateral side edge such that the lateral peripheral forefoot surface **1** will become a main part of the ground contacting surface of the outsole **100**. In this situation, due to the tilt in the shoe **10** and the outsole **100,** the peripheral studs **120a** and **120b** will become oriented more or less vertically with respect to the ground, and hence provide improved traction of the shoe **10** in this extreme kicking position. Similarly, the heel stud **140** can provide improved traction if a player lands on the heel peripheral surface **2** when taking a big step forward, for example. To this end, the heel stud may be off-set from its adjacent main stud in posterior and superior direction (farther towards the back of the sole and farther away from the ground), as can be seen, e.g., in **Figs. 1e** and **1h**.

As can best be seen in **Fig. 1b****,** the outsole **100** comprises several rows of studs in the forefoot region, i.e., on the forefoot part **101,** namely (counted from the front tip of the sole) a first row comprising the studs **110g, 110h** and **110c** (listed from medial to lateral side), a second row comprising the studs **110f, 110d, 110a** and **120a,** and a third row comprising the studs **110e, 110b** and **120b.** As can also be seen in **Fig. 1b****,** these rows are not perfectly straight lines, but a definite grouping of the studs in this manner is perceivable.

The first peripheral stud **120a** and the corresponding main stud **110a** are hence included in the second row (counted from the tip), and the second peripheral stud **120b** and the corresponding main stud **110b** are included in the third row (counted from the tip). This ensures that both peripheral studs **120a** and **120b** are located in a preferred region of the forefoot region, which is indicated in **Fig. 1b** by the dotted line **1p**, and which is not too close to the tip of the foot and not too close to the midfoot/arch region, so that the peripheral studs **120a** and **120b** do not interfere with kicking motions or other movements during use and play.

The outsole **100** therefore represents an outsole comprising at least one peripheral lateral stud **120a, 120b** disposed on a lateral peripheral surface **1** of the outsole **100,** wherein the at least one peripheral lateral stud **120a, 120b** is disposed in a region **1p** of the lateral peripheral surface **1** that lies in a forefoot part **101** of the outsole **100,** and wherein the region **1p** of the lateral peripheral surface **1** in which the at least one peripheral lateral stud **120a, 120b** is disposed is spaced apart from a front tip of the outsole **100** such that the region **1p** of the lateral peripheral surface **1** in which the at least one peripheral lateral stud **120a, 120b** is disposed is arranged further rearwards than a first row of studs **110g, 110h, 110c** of the outsole **100,** counted from the front tip of the outsole **100**.

Moreover, on the lateral peripheral surface **1** of the outsole **100** but outside of the preferred region **1p,** the outsole **100** does not comprise any peripheral studs.

Regarding the shape of the studs and stud tips of the outsole **100** (e.g., understood as a cross-sectional shape taken across a plane that is perpendicular to the central axis of a given stud), most studs / stud tips have a triangular shape, meaning they have three pronounced corners or cusps, but they do not have perfectly straight edges but are generally concavely curved (i.e., inwardly towards the center of the stud). This is, in particular, true for the first- and second peripheral studs **120a** and **120b** as well as the heel stud **140.**

Moreover, for the peripheral studs **120a** and **120b,** one of the corners or cusps is pointing inwards towards a center or central longitudinal axis of the outsole **100,** while the two other edges or cusps point outward and away from the center or central axis of the outsole **100,** as can best be seen in **Fig. 1d**.

The outsole **100** therefore also represents an outsole with a first main stud **110a** disposed on a bottom surface of the outsole, and a first peripheral stud **120a** disposed on a peripheral surface **1** of the outsole, wherein the first peripheral stud has a generally triangular shape, preferably wherein two corners are pointing outwards and one corner is pointing inwards.

However, there are also studs on the outsole **100** that have a different shape, namely the central stud **110d** having a cross-shape or x-shape, and the stud **110h** at the tip of the outsole **100** which only has two corners. This stud **110h** is also considerable smaller than all other studs on the outsole **110,** to not infer with the natural use and play or even cause the wearer to stumble, but to still provide improved traction in the tip region of the outsole **100**.

Regarding the heel stud **140,** **Fig. 1j** shows a possible variation of the shoe **10** and outsole **100** with a heel stud **140v** with a different design compared to heel stud **140** discussed so far. For reference, the position of the adjacent main stud **110j** is also indicated in **Fig. 1j** schematically. As can be seen, the heel stud **140v** is off-set on the rear-foot part **102** of the outsole **100** in comparison to the adjacent heel stud **110j** in posterior and superior direction (i.e., farther back and up).

A further notable feature is that the rearward-facing or posterior side **14r** of the stud **140v** is vertical or almost vertical (if anything, slightly tilted away from vertical towards the posterior side, which in **Fig. 1j** is the right side of the picture), as opposed to being tilted into the direction of the stud's central axis **5',** so that the outsole 100 or at least the shown part thereof can be manufactured without the need for any undercuts in the corresponding injection mold, as the molded part can simply be "pulled out" of the mold in what in **Fig. 1j** is the upward direction. By contrast, if the back edge of the stud **140v** were tilted towards the central axis **5',** this would not be possible due to the undercut that would from where the stud **140v** meets the outsole base plate **102.**

Also, in the situation shown in **Fig. 1j** where the outsole **100** rests flat on the ground (the latter being indicated in **Fig. 1j** by the dashed line **g,** "g" for "ground"), the ground-facing surface **14b** ("b" for "bottom") of the heel stud **140v** is already parallel to the ground (see the dashed line **h** in **Fig. 1j**, "h" for "horizontal"), and hence tilted with respect to the stud's central axis **5'.** This may, for example, help to avoid unintended engagement of the heel stud **140v** with the ground during "normal" walking or playing movements, that may otherwise make the wearer stumble or fall.

**Figs. 2a****-d** show further details about two stud tips **211** and **221** for a pair of main- and peripheral studs **210** and **220** (which may be one of the pairs **110a, 120a** and **110b, 120b** discussed above) which are linked together by a bridge portion **231.**

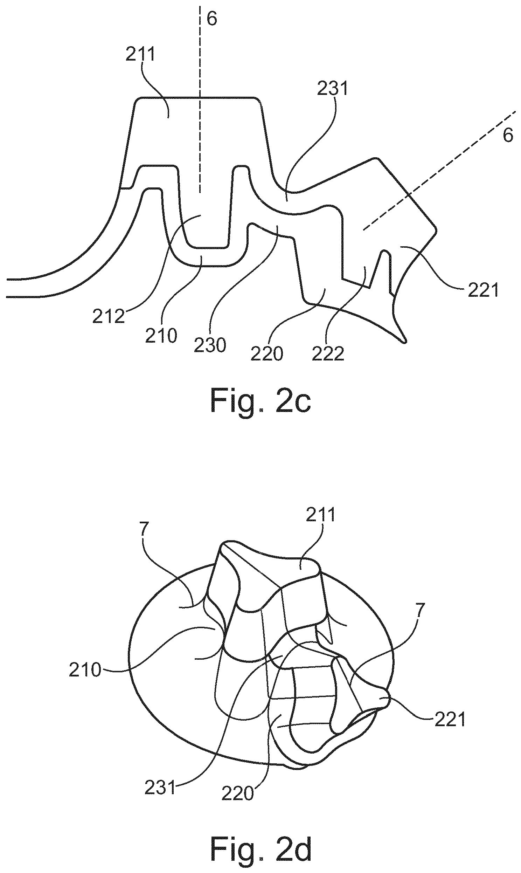

**Fig. 2a** shows a top view of the stud tips **211** and **221,** wherein the tip **211** is intended to be put on top of the stud base of a main stud **210** (e.g., main stud **110a** or **110b** as discussed above), while the tip **221** is intended to be put on top of the stud base of a peripheral stud **220** (e.g., peripheral stud **120a** or **120b** discussed above). The assembled state is shown and illustrated in **Figs. 2c** and **2d****.**

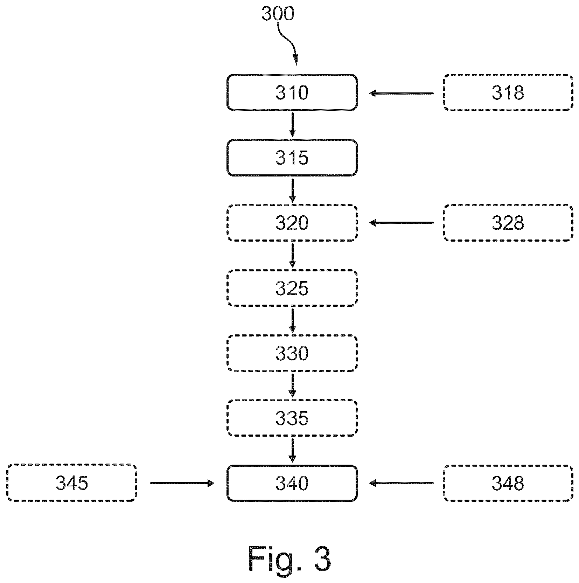

**Fig. 2b** shows a bottom view of the stud tips **211** and **221.** As can be seen in **Fig. 2b****,** the stud tips **211** and **221** are generally hollow at their bottom side but are each provided with a protrusion **212, 222** which facilitates the anchoring and connecting of the stud tips **211, 221** to their respective stud bases, e.g., in an injection-molding process of the stud bases and of the remained of an outsole (s., e.g., step **340** discussed in relation to **Fig. 3** below for more details in this regard).

Both stud tips are furthermore connected by a bridge portion **231,** and the stud tips **211, 221** and the bridge portion **231** are provided as one integral piece, i.e., as a constructional unit. This facilitates, for example, correct placement of the stud tips **211, 221** within a mold for connecting the stud tips to their stud bases, e.g., by the above-mentioned injection-molding process. The bridge portion **231** can also serve the purpose of securing the stud tips **211** and **221** within the mold during such a process, e.g., by a suitable slider element of the mold.

**Fig. 2c** shows a cross-section through the studs **210, 220** and stud tips **211, 221** along the cutline indicated by reference numeral 7 in the assembled state illustrated in a 3D-view in **Fig. 2d****.**

What can be seen in **Fig. 2c** is that below (or, rather, above it in the worn state of the sole when the studs **210** and **220** are pointing downwards towards the ground) the bridge portion **231** that connects and links the stud tips **211** and **221,** the stud bases of the studs **210, 220** comprise a merged region **230** on which the bridge **231** rests and by which it is supported. It is pointed out that while the stud bases of the studs **210** and **220** are also shown as hollow members in **Fig. 2c****,** this need not necessarily be the case and the bases of the studs **210** and **220** can also be provided as solid, non-hollow constructions, which may be easier to achieve in an injection-molding process (but increases the weight of the outsole).

What can also be seen in **Fig.** 2**cb** is that the central axes of the two studs **210, 220,** which are indicated in **Fig. 2c** by the two dotted lines with reference numeral **6** in **Fig.** 2c, are tilted for the reasons already discussed above, in this case at an angle of about 42° degrees.

**Fig. 3** schematically shows an embodiment of a method **300** for the manufacture of an outsole, for example, of the outsole **100** discussed above.

At step **310,** pre-fabricated stud tips for a first main stud and a first peripheral stud which are linked by a first bridge portion are provided (e.g., stud tips **111a** and **121a** linked by bridge portion **131a,** or stud tips **211** and **221** linked by bridge portion **231).**

At step **315,** the pre-fabricated stud tips are placed into a mold which is used to manufacture the outsole.

At step **340,** after the pre-fabricated stud tips are placed into the mold, at least part of the outsole is injection-molded.

Preferably, as indicated at numeral **318,** the pre-fabricated stud tips for the first main stud and the first peripheral stud as well as the first bridge portion are provided as an integral piece made from a common material, e.g., from one or more of the following materials: a thermoplastic elastomer (TPE) material, a polyamide (PA) material, a polyurethane (PU) material, for example, polyetherblockamide (PEBA), polyamide 11 (PA11), polyamide 12 (PA12), or thermoplastic polyurethane (TPU), for example TPU with a 95A Shore Hardness. The manufacture of these stud tips and bridge portion may have been accomplished, for example, in a separate injection-molding process that is not shown in **Fig. 3** for simplicity.

Optionally, at step **320,** pre-fabricated stud tips for a second main stud and a second peripheral stud that are linked by a second bridge portion are provided (e.g., stud tips **111b** and **121b** linked by bridge portion **131b,** or stud tips **211** and **221** linked by bridge portion **231),** and at step **325** they are also placed into the mold prior to the injection-molding in step **340.**

As indicated at numeral **328,** the pre-fabricated stud tips for the second main stud and the second peripheral stud as well as the second bridge portion can also be provided as an integral piece made from a common material (e.g., the same material that was used for the first tips and bridge portion). Again, the manufacture of these stud tips and bridge portion may have been accomplished, for example, in a separate injection-molding process that is not shown in **Fig. 3** for simplicity.

Further yet, as indicated at step **330,** a further pre-fabricated stud tip or tips, in particular for a further main stud or studs and/or for an additional heel stud or studs (e.g., stud tip **141** for heel stud **140),** may be provided and, at step **335,** be placed into the mold before the injection-molding in step **340.** Also a further stud tip or tips for additional peripheral studs may here be provided.

During the method **300,** in particular during at least part of the injection-molding process in step **340,** the pre-fabricated pair of stud tips for the first main- and peripheral studs and/or for the second main- and peripheral can be held in place by a slider element or slider elements of the mold, as indicated at numeral **345.** This can also apply to any other stud tip or tips, particularly to pairs of stud tips linked by a respective bridge portion, although this is not explicitly shown in **Fig. 3** and is also not further discussed here, for simplicity.

Finally, the injection-molding in step **340** may comprises an injection-molding of a material comprising, for example, one or more of the following materials: a thermoplastic elastomer (TPE) material, a polyamide (PA) material, a polyurethane (PU) material, for example, polyetherblockamide (PEBA), polyamide 11 (PA11), polyamide 12 (PA12), and/or thermoplastic polyurethane (TPU), as indicated at numeral **348.**

The injection-molding in step **340** may, in particular, lead to the formation of (at least some of) the stud bases and create a connection of (at least some of) the pre-fabricated stud tips to these stud bases, and it may also lead to the formation of studs that do not comprise dedicated stud tips but are fully formed in the injection-molding process in step **340** (e.g., one or more surface texture studs **150** as discussed above).

To conclude, it is noted that while the different steps of the method **300** are presented in a particular order in **Fig. 3** and above, this order may also be changed within the scope of the present disclosure as long as this is not logically, physically or technically ruled out.

## Claims

1. Outsole (100) for a shoe (10), in particular for a soccer shoe, comprising:
1a. a first main stud (110a, 210) disposed on a bottom surface of the outsole, and
1b. a first peripheral stud (120a, 220) disposed on a peripheral surface (1, 2) of the outsole, **characterised in that**
1c. a tip (111a, 211) of the first main stud and a tip (121a, 221) of the first peripheral stud are linked by a first bridge portion (131a, 231).

2. Outsole according to claim 1, wherein the first peripheral stud lies adjacent to the first main stud.

3. Outsole according to claim 1 or 2, further comprising a second main stud (110b) disposed on the bottom surface of the outsole and a second peripheral stud (120b) disposed on the peripheral surface of the outsole, wherein a tip (111b) of the second peripheral stud and a tip (121b) of the second main stud are linked by a second bridge portion (131b).

4. Outsole according to claim 3, wherein the second peripheral stud lies adjacent to the second main stud.

5. Outsole according to one of the preceding claims 1 - 4, wherein a base of the first main stud and a base of the first peripheral stud are at least partly merged, and/or wherein a base of the second main stud and a base of the second peripheral stud are at least partly merged.

6. Outsole according to one of the preceding claims 1 - 5, wherein the first peripheral stud and/or the second peripheral stud are arranged on a lateral side of the outsole.

7. Outsole according to one of the preceding claims 1 - 6, wherein the first peripheral stud and/or the second peripheral stud are arranged in a forefoot region of the outsole.

8. Outsole according to one of the preceding claims 1 - 7, wherein a central axis of the first peripheral stud is tilted in relation to a central axis of the first main stud, and/or wherein a central axis of the second peripheral stud is tilted in relation to a central axis of the second main stud.

9. Outsole according to one of the preceding claims 3 - 8, wherein the outsole comprises at least a first, a second, and a third row of studs, counted from a front tip of the outsole, wherein the first main stud and the first peripheral stud are included in the second row of studs, and wherein the second main stud and the second peripheral stud are included in the third row of studs.

10. Outsole according to one of the preceding claims 1 - 9, wherein the tip of the first main stud, the tip of the first peripheral stud and the first bridge portion are formed as an integral piece from a common material, and/or wherein the tip of the second main stud, the tip of the second peripheral stud and the second bridge portion are formed as an integral piece from a common material.

11. Outsole according to one of the preceding claims 1 - 10, wherein the first peripheral stud and/or the second peripheral stud have a generally triangular shape, preferably wherein two corners are pointing outwards and one corner is pointing inwards.

12. Outsole according to one of the preceding claims 1 - 11, further comprising at least one additional heel stud (140, 140v), which is also arranged on the peripheral surface (2) of the outsole.

13. Outsole according to claim 12, wherein the additional heel stud lies posterior and superior off-set compared to an adjacent main stud (110j), and wherein a ground-facing surface (14b) of a tip of the additional heel stud is arranged essentially parallel to the ground when the outsole rests flat on the ground.

14. Outsole according to one of the preceding claims 1 - 13, wherein the outsole comprises a forefoot part (101) and a heel part (102) which are separate from one another.

15. Method (300) for the manufacture of an outsole according to one of the claims 1 - 14, the method comprising:
15a. providing (310) pre-fabricated stud tips (111a, 121a, 211, 221) for a first main stud (110a, 210) and a first peripheral stud (120a, 220) which are linked by a first bridge portion (131a, 231),
15b. placing (315) the pre-fabricated stud tips into a mold, and
15c. after the pre-fabricated stud tips are placed into the mold, injection-molding (340) at least part of the outsole, wherein
15d. the pre-fabricated stud tips for the first main stud and the first peripheral stud as well as the first bridge portion are provided (318) as an integral piece made from a common material.

## Patentansprüche

1. Außensohle (100) für einen Schuh (10), insbesondere für einen Fußballschuh, umfassend:
1a. einen ersten Hauptstollen (110a, 210), der auf einer Unterseite der Außensohle angeordnet ist, und
1b. einen ersten Umfangsstollen (120a, 220), der auf einer Umfangsfläche (1, 2) der Außensohle angeordnet ist, **dadurch gekennzeichnet, dass**
1c. eine Spitze (111a, 211) des ersten Hauptstollens und eine Spitze (121a, 221) des ersten Umfangsstollens durch einen ersten Brückenabschnitt (131a, 231) verbunden sind.

2. Außensohle nach Anspruch 1, wobei der erste Umfangsstollen neben dem ersten Hauptstollen liegt.

3. Außensohle nach Anspruch 1 oder 2, ferner umfassend einen zweiten Hauptstollen (110b), der auf der Unterseite der Außensohle angeordnet ist, und einen zweiten Umfangsstollen (120b), der auf der Umfangsfläche der Außensohle angeordnet ist, wobei eine Spitze (111b) des zweiten Umfangsstollens und eine Spitze (121b) des zweiten Hauptstollens durch einen zweiten Brückenabschnitt (131b) verbunden sind.

4. Außensohle nach Anspruch 3, wobei der zweite Umfangsstollen neben dem zweiten Hauptstollen liegt.

5. Außensohle nach einem der vorhergehenden Ansprüche 1 - 4, wobei eine Basis des ersten Hauptstollens und eine Basis des ersten Umfangsstollens zumindest teilweise zusammengeführt sind und/oder wobei eine Basis des zweiten Hauptstollens und eine Basis des zweiten Umfangsstollens zumindest teilweise zusammengeführt sind.

6. Außensohle nach einem der vorhergehenden Ansprüche 1 - 5, wobei der erste Umfangsstollen und/oder der zweite Umfangsstollen auf einer lateralen Seite der Außensohle angeordnet sind.

7. Außensohle nach einem der vorhergehenden Ansprüche 1 - 6, wobei der erste Umfangsstollen und/oder der zweite Umfangsstollen in einem Vorderfußbereich der Außensohle angeordnet sind.

8. Außensohle nach einem der vorhergehenden Ansprüche 1 - 7, wobei eine Mittelachse des ersten Umfangsstollens in Bezug auf eine Mittelachse des ersten Hauptstollens geneigt ist und/oder wobei eine Mittelachse des zweiten Umfangsstollens in Bezug auf eine Mittelachse des zweiten Hauptstollens geneigt ist.

9. Außensohle nach einem der vorhergehenden Ansprüche 3 - 8, wobei die Außensohle mindestens eine erste, eine zweite und eine dritte Reihe von Stollen umfasst, gezählt von einer vorderen Spitze der Außensohle, wobei der erste Hauptstollen und der erste Umfangsstollen in der zweiten Reihe von Stollen enthalten sind und wobei der zweite Hauptstollen und der zweite Umfangsstollen in der dritten Reihe von Stollen enthalten sind.

10. Außensohle nach einem der vorhergehenden Ansprüche 1 - 9, wobei die Spitze des ersten Hauptstollens, die Spitze des ersten Umfangsstollens und der erste Brückenabschnitt als ein integrales Stück aus einem gemeinsamen Material gebildet sind und/oder wobei die Spitze des zweiten Hauptstollens, die Spitze des zweiten Umfangsstollens und der zweite Brückenabschnitt als ein integrales Stück aus einem gemeinsamen Material gebildet sind.

11. Außensohle nach einem der vorhergehenden Ansprüche 1 - 10, wobei der erste Umfangsstollen und/oder der zweite Umfangsstollen eine im Allgemeinen dreieckige Form aufweisen, wobei vorzugsweise zwei Ecken nach außen zeigen und eine Ecke nach innen zeigt.

12. Außensohle nach einem der vorhergehenden Ansprüche 1 - 11, ferner umfassend mindestens einen zusätzlichen Fersenstollen (140, 14ov), der auch auf der Umfangsfläche (2) der Außensohle angeordnet ist.

13. Außensohle nach Anspruch 12, wobei der zusätzliche Fersenstollen im Vergleich zu einem benachbarten Hauptstollen (110j) posterior und superior versetzt liegt, und wobei eine dem Boden zugewandte Fläche (14b) einer Spitze des zusätzlichen Fersenstollens im Wesentlichen parallel zum Boden angeordnet ist, wenn die Außensohle flach auf dem Boden aufliegt.

14. Außensohle nach einem der vorhergehenden Ansprüche 1 - 13, wobei die Außensohle einen Vorderfußteil (101) und einen Fersenteil (102) umfasst, die voneinander getrennt sind.

15. Verfahren (300) zur Herstellung einer Außensohle nach einem der vorhergehenden Ansprüche 1 - 14, umfassend:
15a. Bereitstellen (310) vorgefertigter Stollenspitzen (111a, 121a, 211, 221) für einen ersten Hauptstollen (110a, 210) und einen ersten Umfangsstollen (120a, 220), die durch einen ersten Brückenabschnitt (131a, 231) verbunden sind,
15b. Platzieren (315) der vorgefertigten Stollenspitzen in eine Form, und
15c. nach dem Platzieren der vorgefertigten Stollenspitzen in die Form, Spritzgießen (340) zumindest eines Teils der Außensohle, wobei
15d. die vorgefertigten Stollenspitzen für den ersten Hauptstollen und den ersten Umfangsstollen sowie der erste Brückenabschnitt als ein integrales Stück aus einem gemeinsamen Material bereitgestellt (318) werden.

## Revendications

1. Semelle extérieure (100) pour une chaussure (10), en particulier pour une chaussure de football, comprenant :
1a. un premier crampon principal (110a, 210) disposé sur une surface de dessous de la semelle extérieure, et
1b. un premier crampon périphérique (120a, 220) disposé sur une surface périphérique (1, 2) de la semelle extérieure, **caractérisée en ce que**
1c. un bout (111a, 211) du premier crampon principal et un bout (121a, 221) du premier crampon périphérique sont reliés par une première partie de pont (131a, 231).

2. Semelle extérieure selon la revendication 1, dans laquelle le premier crampon périphérique s'étend adjacent au premier crampon principal.

3. Semelle extérieure selon la revendication 1 ou 2, comprenant en outre un second crampon principal (110b) disposé sur la surface de dessous de la semelle extérieure et un second crampon périphérique (120b) disposé sur la surface périphérique de la semelle extérieure, un bout (111b) du second crampon périphérique et un bout (121b) du second crampon principal étant reliés par une seconde partie de pont (131b).

4. Semelle extérieure selon la revendication 3, dans laquelle le second crampon périphérique s'étend adjacent au second crampon principal.

5. Semelle extérieure selon l'une des revendications 1 à 4 précédentes, dans laquelle une base du premier crampon principal et une base du premier crampon périphérique sont au moins partiellement fusionnées, et/ou dans laquelle une base du second crampon principal et une base du second crampon périphérique sont au moins partiellement fusionnées.

6. Semelle extérieure selon l'une des revendications 1 à 5 précédentes, dans laquelle le premier crampon périphérique et/ou le second crampon périphérique sont agencés sur un côté latéral de la semelle extérieure.

7. Semelle extérieure selon l'une des revendications 1 à 6 précédentes, dans laquelle le premier crampon périphérique et/ou le second crampon périphérique sont agencés dans une région d'avant-pied de la semelle extérieure.

8. Semelle extérieure selon l'une des revendications 1 à 7 précédentes, dans laquelle un axe central du premier crampon périphérique est incliné par rapport à un axe central du premier crampon principal, et/ou dans laquelle un axe central du second crampon périphérique est incliné par rapport à un axe central du second principal.

9. Semelle extérieure selon l'une des revendications 3 à 8 précédentes, dans laquelle la semelle extérieure comprend au moins une première, une seconde, et une troisième rangée de crampons, comptées depuis un bout avant de la semelle extérieure, dans laquelle le premier crampon principal et le premier crampon périphérique font partie de la seconde rangée de crampons, et dans laquelle le second crampon principal et le second crampon périphérique font partie de la troisième rangée de crampons.

10. Semelle extérieure selon l'une des revendications 1 à 9 précédentes, dans laquelle le bout du premier crampon principal, le bout du premier crampon périphérique et la première partie de pont sont formés en une pièce monobloc à partir d'un matériau commun, et/ou dans laquelle le bout du second crampon principal, le bout du second crampon périphérique et la seconde partie de pont sont formés en une pièce monobloc à partir d'un matériau commun.

11. Semelle extérieure selon l'une des revendications 1 à 10 précédentes, dans laquelle le premier crampon périphérique et/ou le second crampon périphérique présentent une forme globalement triangulaire, de préférence dans laquelle deux sommets sont tournés vers l'extérieur et un sommet est tourné vers l'intérieur.

12. Semelle extérieure selon l'une des revendications 1 à 11 précédentes, comprenant en outre au moins un crampon de talon supplémentaire (140, 140v), qui est également agencé sur la surface périphérique (2) de la semelle extérieure.

13. Semelle extérieure selon la revendication 12, dans laquelle le crampon de talon supplémentaire est décalé postérieurement et supérieurement par rapport au crampon principal adjacent (110j), et dans laquelle une surface tournée vers le sol (14b) d'un bout du crampon de talon supplémentaire est agencée essentiellement parallèle au sol lorsque la semelle extérieure repose à plat sur le sol.

14. Semelle extérieure selon l'une des revendications 1 à 13 précédentes, dans laquelle la semelle extérieure comprend une partie d'avant-pied (101) et une partie de talon (102) qui sont séparées l'une de l'autre.

15. Procédé (300) pour la fabrication d'une semelle extérieure selon l'une des revendications 1 à 14, le procédé comprenant :
15a. l'obtention (310) de bouts de crampon préfabriqués (111a, 121a, 211, 221) pour un premier crampon principal (110a, 210) et un premier crampon périphérique (120a, 220) qui sont reliés par une première partie de pont (131a, 231),
15b. le placement (315) des bouts de crampon préfabriqués dans un moule, et
15c. après que les bouts de crampon préfabriqués ont été placés dans le moule, le moulage par injection (340) d'au moins une partie de la semelle extérieure, dans lequel
15d. les bouts de crampon préfabriqués pour le premier crampon principal et le premier crampon périphérique ainsi que la première partie de pont sont obtenus (318) sous forme d'une pièce monobloc réalisée en un matériau commun.
